# EUROPÄISCHE PATENTSCHRIFT

(11) **EP 3 190 240 B1**
(45) Veröffentlichungstag und Bekanntmachung des Hinweises auf die Patenterteilung: **08.01.2025**
(21) Anmeldenummer: 17150319.6
(22) Anmeldetag: 04.01.2017
(51) Int. Cl.: E04B 2/90, E06B 3/54, E06B 3/62, E06B 7/14

(54) **DICHTUNGSELEMENT**
SEALING ELEMENT
ÉLÉMENT D'ÉTANCHÉITÉ

(30) Priorität: 08.01.2016 DE 102016100267
(43) Veröffentlichungstag der Anmeldung: 12.07.2017
(73) Patentinhaber: Sapa AS, 0185 Oslo (NO)
(72) Erfinder: Spannbauer, Manfred, 89077 Ulm (DE); Rauprich, Christian, 89275 Elchingen (DE)
(74) Vertreter: Eisenführ Speiser

(56) Entgegenhaltungen:
- EP-A1- 2 434 081
- DE-U1- 9 305 040

## Beschreibung

Die Erfindung bezieht sich auf ein Dichtungselement zur Abdichtung von Stoßfugen zwischen Elementen einer in Elementbauweise gebauten Fassade.

Gerade bei der Montage von Elementfassaden werden zur Erzielung einer kurzen Bauzeit und einer hohen Einbaugenauigkeit in umfangreichem Maß Vorrichtungen eingesetzt und angewandt.

Aus architektonischen Gründen wird bei manchen Bauobjekten ein Ganzglas-Erscheinungsbild gefordert. Ein solches Erscheinungsbild lässt sich nur erreichen, indem auf Glasleisten entlang der Elementränder oder Andruckleisten über den Stoßfugen zwischen den Elementen verzichtet wird. Da Glasleisten und Andruckleisten über die Glasebene hervor treten, würden diese zu einer Inhomogenität der Glasoptik führen.

Auf diese Weise werden oftmals Ganzglasfassaden hergestellt, bei denen nur die Glasscheiben die Optik bestimmen. Die Fugen zwischen den Scheiben treten in den Hintergrund.

Solche optisch wenig auffallenden Fugen werden in der Regel mit Dichtungsprofilen abgedichtet, die an den Rändern der Fassadenelemente vormontiert sind.

Die Fassadenelemente werden dann nur noch nacheinander neben und übereinander positioniert und befestigt.

Bisherige Lösungen weisen verschiedene Nachteile auf. Hierzu gehört unter anderem, daß die Fassadenelemente oftmals nur in einer bestimmten Reihenfolge montierbar sind. Zudem besteht oft der Nachteil, daß die Dichtungen teilweise nicht dicht gegenüber Schlagregen sind. Ein weiterer Nachteil ist, daß eingedrungenes Wasser nicht oder nur schlecht abgeleitet werden kann. EP 2 434 081 A1 beschreibt ein System für Vorhangfassaden mit einer Abdichtvorrichtung.

Aufgabe der Erfindung ist es daher, ein Dichtungselement vorzuschlagen, welches die genannten Nachteile nicht aufweist.

Diese Aufgabe wird erfindungsgemäß dadurch gelöst, daß das Dichtungselement gemäß Anspruch 1 einen Verbindungsflansch zur Befestigung des Dichtungselements am Fassadenelement und eine oder mehrere Dichtungslippen aufweist.

Dadurch wird das Dichtungselement und damit auch die Dichtungslippen an der vorgesehenen Stelle am Fassadenelement angeordnet. Diese werden beim Montieren des Fassadenelements nicht verschoben.

Sehr vorteilhaft ist es erfindungsgemäß auch, dass der Verbindungsflansch als an einer Seitenkante des jeweiligen Fassadenelements anliegender Steg ausgebildet ist.

Dieser Steg sorgt für eine sehr große Stabilität, ohne dass das Dichtungselement dabei unnötig große Ausmaße einnimmt.

Das Dichtungselement ist als Eckteil ausgebildet bzw. umfasst ein Eckteil.

Damit kann auch und gerade im Eckbereich eine gute Abdichtung gewährleistet werden.

Gemäß einer weiteren Ausgestaltung der Erfindung ist es auch sehr vorteilhaft, wenn die Dichtungslippe einen gebogenen oder abgewinkelten Querschnitt aufweist, wobei die Biegung oder Abwinkelung in Bezug auf das Dichtungselement nach innen gerichtet sein kann.

Durch eine solche geometrische Ausgestaltung wird ein besonders gutes Dichtungsergebnis erzielt. Neben gebogenen oder abgewinkelten Querschnitten sind auch halbkreisförmige, kreisförmige, elliptische oder geschlossene oder offene mehrwinklige Querschnitte denkbar.

Sehr vorteilhaft ist es erfindungsgemäß auch, dass die Dichtungslippe an der Vorderkante bzw. Außenkante des Verbindungsflansches angeordnet ist.

Dadurch wird eine im Wesentlichen ebene Fläche geschaffen, die optisch ruhig wirkt. Zudem wird das Eindringen von Wasser vermieden.

Gemäß der Erfindung ist es äußerst vorteilhaft, dass von der Vorderkante bzw. Außenkante des Dichtungselements nach innen verlaufende, nach innen steigende Lippe vorgesehen ist.

Eine solche Lippe kann zum Ausleiten von eingedrungenem Wasser genutzt werden. Auch aus weiter hinten bzw. innen liegenden Kammern stammendes Wasser und Feuchtigkeit kann abgeleitet werden.

Dabei ist es sehr vorteilhaft, dass die Lippe als Rinne ausgebildet ist.

Bei Ausbildung als Rinne wird abzuleitendes Wasser sehr gut geführt. Das Umgehen der Lippe wird vermieden.

Ebenfalls sehr vorteilhaft ist es erfindungsgemäß auch, dass die Dichtlippe im Bereich der zweiten Lippe mit einer Ausnehmung versehen ist, wobei die zweite Lippe durch diese Ausnehmung hindurch ragen kann.

Durch diese Ausgestaltung wird Wasser an der vorbestimmten Stelle nach außen abgeleitet.

Eine weitere erfindungsgemäß sehr vorteilhafte Ausgestaltung liegt vor, wenn die Lippen zweier benachbarter Dichtungselemente aneinander anliegen oder übereinander greifen und so eine gemeinsame Rinne bilden.

Damit wird die Rinne beim Zusammenfügen der Fassadenelemente gebildet.

Äußerst vorteilhaft ist es gemäß einer Ausgestaltung der Erfindung, wenn die Steigung der Rinne zwischen 30 und 70° gegenüber der Horizontalen beträgt, vorzugsweise zwischen 35 und 60°, insbesondere 40°.

Dadurch wird sichergestellt, daß die Adhäsion des Wassers überwunden wird und auch kleinere Tropfen sicher abgeleitet werden.

Ebenfalls sehr vorteilhaft ist es erfindungsgemäß, wenn die Ausnehmung eine derartige Größe aufweist, daß die Adhäsion von durchzuleitendem Wasser zu keiner Stauung führt.

Stauungen würden zu einem Durchdrücken des Wassers in andere Kammern oder darunterliegende Bereiche führen. Dies ist nicht erwünscht.

Eine weitere sehr vorteilhafte Fortbildung der Erfindung liegt vor, wenn die Dichtlippe derart ausgebildet ist, daß die Dichtlippen zweier benachbarter Dichtungselemente aneinander anzuliegen vermögen und so eine Abdichtung hergestellt wird.

Damit wird eine sehr gute Abdichtung hergestellt.

Eine sehr vorteilhafte Weiterbildung der Erfindung ist auch darin zu sehen, daß das Dichtungselement ein Eckelement bildet, wobei benachbarte Eckelemente über Verbindungsflansch und Dichtlippe miteinander verbunden sind.

Damit werden größere Abschnitte ohne Stoßkanten gebildet. Das Fehlen von Stoßkanten sichert, daß möglichst wenig Wasser eindringt.

Dabei hat es sich als besonders vorteilhaft erwiesen, wenn vier miteinander verbundene Dichtungselemente zusammen einen Dichtungsrahmen bilden, bei dem in wenigstens einem Teil der Ecken Rinnen vorgesehen sind.

Der Dichtungsrahmen kann um das Fassadenelement gelegt werden und bleibt somit bis einschließlich der Montage der Fassadenelemente an Ort und Stelle. Zudem wird eine sehr gute Abdichtung sichergestellt.

Im folgenden wird die Erfindung anhand eines Ausführungsbeispiels veranschaulicht.

Dabei zeigen:
- Fig. 1
   - ein Schaubild eines als obere Ecke ausgebildeten Dichtungselements für ein Fassadenelement,
- Fig. 2
   - ein rückwärtiges Schaubild desselben Dichtungselements,
- Fig. 3
   - eine Seitenansicht desselben Dichtungselements,
- Fig. 4
   - ein Schaubild eines als untere Ecke ausgebildeten Dichtungselements für ein Fassadenelement,
- Fig. 5
   - ein rückwärtiges Schaubild desselben Dichtungselements,
- Fig. 6
   - eine Seitenansicht desselben Dichtungselements,
- Fig. 7
   - einen Horizontalschnitt durch zwei nebeneinander liegende Dichtungselemente,
- Fig. 8
   - eine Prinzipskizze des Zusammenbaus einer Vorhängefassade aus Fassadenelementen, bei dem von links nach rechts gearbeitet wird,
- Fig. 9
   - eine Prinzipskizze des Zusammenbaus einer Vorhängefassade aus Fassadenelementen, bei dem von rechts nach links gearbeitet wird,
- Fig. 10
   - ein Schaubild mit zwei nebeneinader angeordneten Dichtungselementen, und
- Fig. 11
   - ein frontale Ansicht eines Fassadenteils mit zwei Dichtungselementen im eingebauten Zustand.

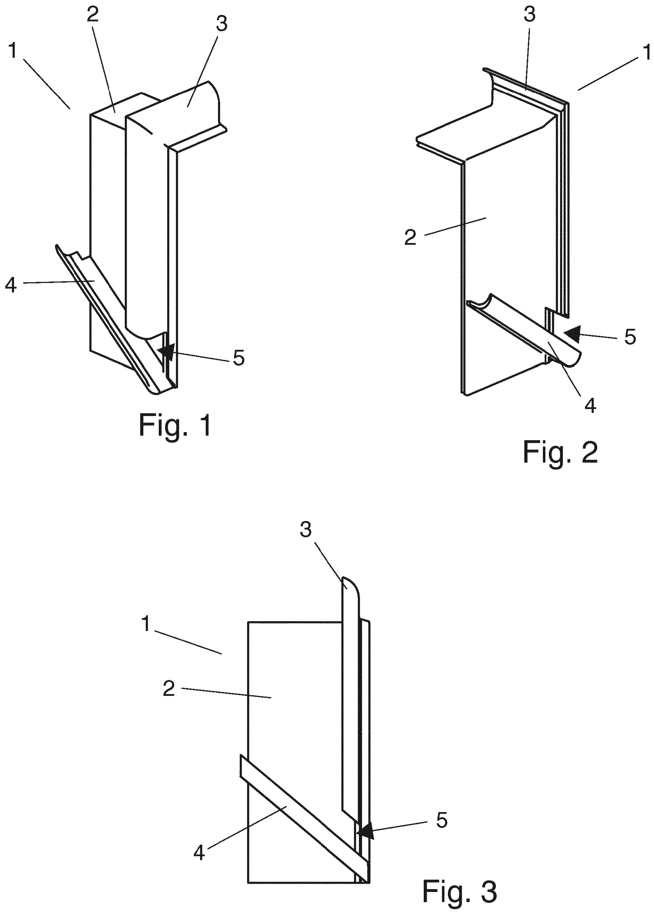

Mit 1 ist in Fig. 1 ein Dichtungselement bezeichnet, welches von außen gesehen als obere linke Ecke für ein Fassadenelement vorgesehen ist.

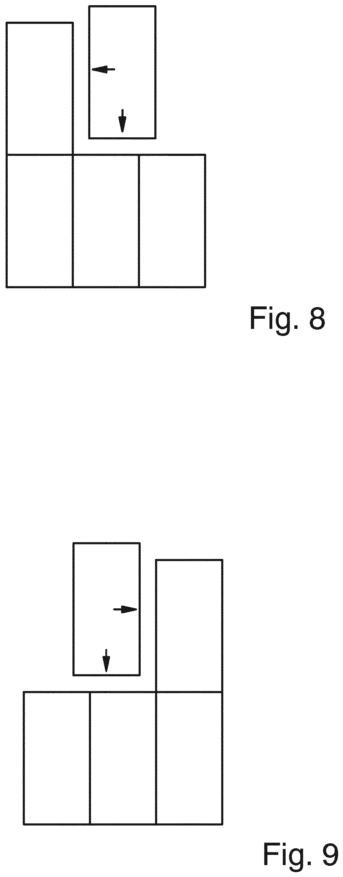

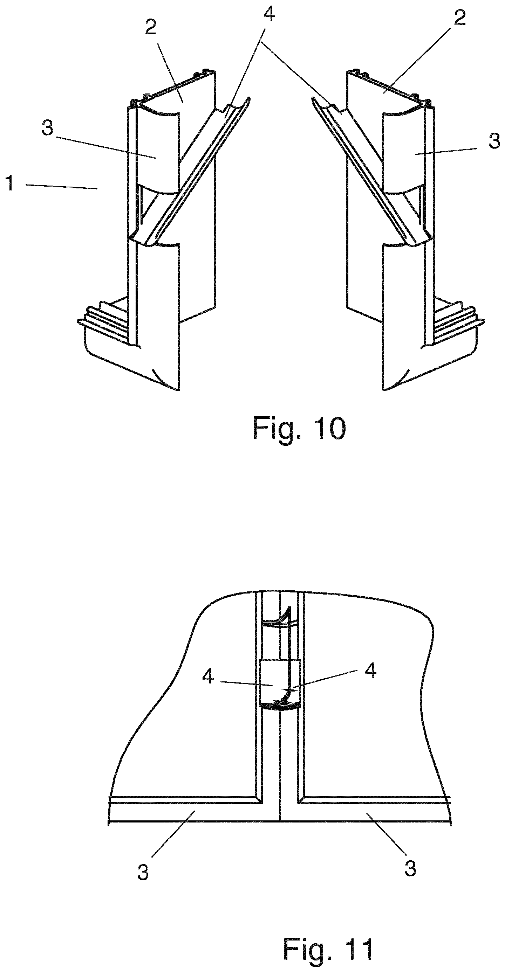

Bei vorgehängten Fassaden wird in der Regel zwischen Elementfassaden und Pfosten-Riegel-Fassaden unterschieden. Elementfassaden sind aus einzelnen Fassadenelementen zusammengesetzt, die an Aufhängungen am Gebäude, vorzugsweise an den Gebäudedecken, aufgehängt werden. Hierzu werden die Fassadenelemente beispielsweise mit Hilfe eines Kranes am Gebäude montiert, indem jedes Element an ein bereits montiertes Nachbarelement oder darunter angeordnetes Element angefügt wird. Die Arbeitsweise kann dabei von links nach rechts oder von rechts nach links sein, wie dies durch die Fig. 8 und 9 verdeutlicht wird.

Bei Elementfassaden kann an verschiedenen Stellen Wasser eindringen oder sich Kondensat bilden.

Beides muss nach außen abgeleitet werden.

Hierfür ist das erfindungsgemäße Dichtungselement 1 vorgesehen.

Das Dichtungselement 1 ist aus einem Verbindungsflansch 2 und einer daran angeordneten Dichtlippe 3 aufgebaut.

Der Verbindungsflansch 2 schmiegt sich an die Seitenkante des Fassadenelements an. An seiner Vorderkante ist die nach innen gebogene Dichtlippe 3 angeordnet.

Beim Zusammensetzen der Fassadenelemente zu einer Fassade stoßen zwei Dichtlippen 3 benachbarter Fassadenelemente aneinander und sorgen so für eine Abdichtung der Fassadenelemente zueinander.

Der Verbindungsflansch 2 ist bei diesem Ausführungsbeispiel um die Ecke des Fassadenelements herum geführt und für die linke obere Ecke des Fassadenelements geeignet.

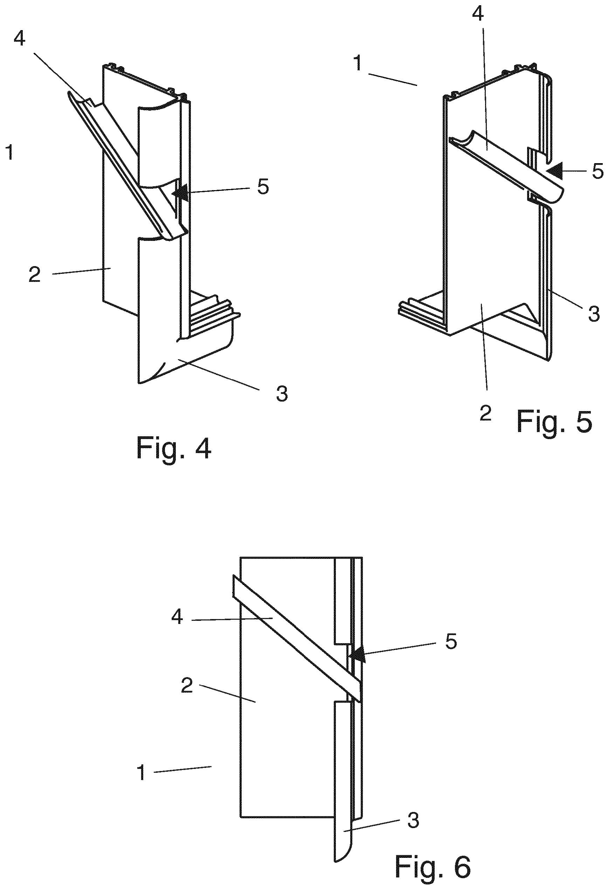

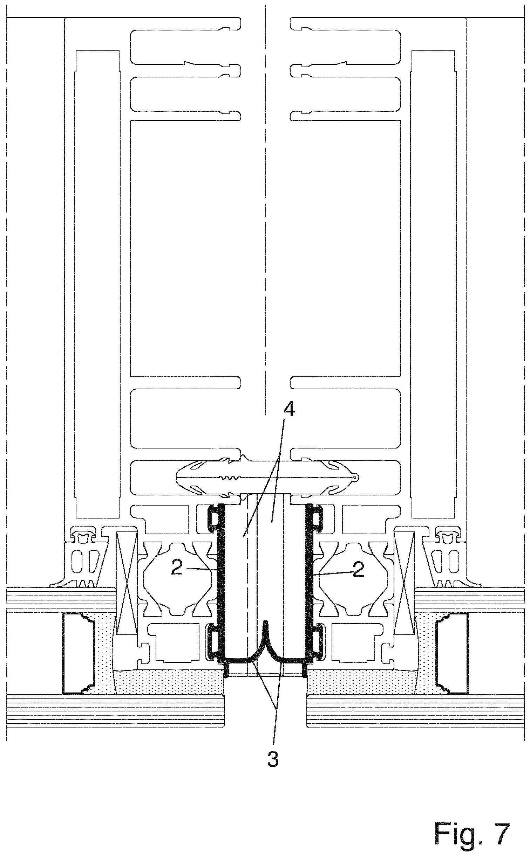

Für die anderen Ecken des Fassadenelements sind gleichartige, an die jeweilige Ecke angepasste Varianten des Dichtungselements 1 vorgesehen, wie dies beispielsweise in den Fig. 4, 5 und 6 gezeigt ist. Dort ist eine untere linke Ecke dargestellt.

Die Dichtlippe 3 erstreckt sich ebenfalls über die Ecke hinweg.

Am senkrechten Abschnitt des Verbindungsflansches 2 ist eine Lippe 4 vorgesehen, welche - von vorne aus gesehen - schräg nach hinten ansteigt und sich im wesentlichen über die gesamte Tiefe des Verbindungsflansches 2 erstreckt.

Es ist denkbar, daß die Lippe 4 kürzer oder länger wie die Tiefenerstreckung des Dichtungslements ist.

Die Tiefe des Verbindungsflansches 2 ist auf die Tiefe des Fassadenelements abgestimmt und entspricht dieser in der Regel.

Zusätzlich ist in der Dichtlippe 3 eine Ausnehmung 5 vorgesehen, durch welche die Lippe 4 hindurch ragen kann, wie dies im vorliegenden Ausführungsbeispiel dargestellt ist.

Es ist aber auch denkbar, daß die Lippe 4 mit der Dichtlippe 3 abschließt.

Wasser oder Kondensat, welches sich im Zwischenraum zwischen zwei Fassadenelementen befindet, wird über die Lippe 4 entsprechend der Schwerkraft nach außen ausgeleitet und kann dann vor der Fassade abtropfen oder an dieser nach unten laufen.

Die Lippe 4 bildet dazu eine Rinne, in welcher das Wasser bzw. Kondensat abgeleitet wird.

Beim Zusammenbau mehrerer Fassadenelemente stoßen benachbarte Lippen 4 aneinander oder überlappen sich auch.

In beiden Fällen kann dadurch eine Rinne geformt werden. Die Lippen 4 weisen dabei einen gebogenen oder gewinkelten Querschnitt auf. Es ist auch denkbar, daß jede Lippe 4 eine eigene Rinne bildet.

Die Lippe 4 verläuft unter einem Winkel steigend nach innen. Der Steigungswinkel beträgt dabei zwischen 30 und 70° gegenüber der Horizontalen, vorzugsweise zwischen 35 und 60°. Besonders gute Ergebnisse wurden bei einer Steigung von rund 40° erzielt.

Dabei wird verhindert, daß sich Wassertropfen durch Adhäsion an der Lippe 4 anlagern und so für Stauungen sorgen.

Zudem wird eventuell eingedrungener Schmutz beim Abfließen des Wassers bzw. Kondensats mit ausgeschwemmt, da die Fließgeschwindigkeit ausreichend hoch ist.

Die Ausnehmungen 5 sind hinsichtlich ihrer Größe derart abgestimmt, daß sich Wasser nicht aufgrund seiner Oberflächenspannung staut, sondern direkt abgeleitet wird.

Zwischen zwei Dichtungselementen 1 eines Fassadenelements kann eine hier nicht dargestellte Verbindung vorgesehen sein. Diese wird zweckmäßigerweise die Verbindungsflansche 2 verbinden und eine Verbindung der Dichtungslippen 3 vorsehen. Die Dichtungslippen 3 sind dabei auf der vollen Länge der Verbindung ausgebildet.

Die Verbindung der Verbindungsflansche 2 kann dagegen beispielsweise mit reduzierter Tiefe ausgeführt sein.

Durch die Verbindungen wird aus mehreren Dichtungselementen ein Rahmen gebildet, der das jeweilige Fassadenelement umfasst.

Dabei können in allen Ecken des Fassadenelements Dichtungselemente 1 vorgesehen sein.

Gerade bei größeren Fassaden kann so eine Ableitung von eingedrungenem Wasser und Kondensat an allen Ecken gewährleistet werden, so daß sich die in den

Zwischenräumen befindliche Menge an Wasser und Kondensat nicht zu stark anwächst und eventuell die Flüssigkeit auf die Innenseite der Fassade durch drückt.

## Patentansprüche

1. Dichtungselement zur Abdichtung von Stoßfugen zwischen Elementen einer in Elementbauweise gebauten Fassade, wobei das Dichtungselement einen Verbindungsflansch zur Befestigung des Dichtungselements am Fassadenelement und ein oder mehrere Dichtungslippen aufweist, wobei der Verbindungsflansch als an einer Seitenkante des jeweiligen Fassadenelements anliegender Steg ausgebildet ist, wobei das Dichtungselement als Eckteil ausgebildet ist bzw. ein Eckteil umfasst und wobei die Dichtungslippe an einer Vorderkante bzw. Außenkante des Verbindungsflansches angeordnet ist, **dadurch gekennzeichnet, dass** eine von der Vorderkante bzw. Außenkante des Dichtungselements nach innen verlaufende, nach innen steigende Lippe vorgesehen ist, die sich an einem senkrechten Abschnitt des Verbindungsflansches entlang einer Tiefe des Verbindungsflanschs erstreckt und als Rinne ausgebildet ist und dass die Dichtlippe im Bereich der Lippe mit einer Ausnehmung versehen ist, wobei die Lippe durch diese Ausnehmung hindurch ragt oder mit der Dichtlippe abschließt..

2. Dichtungselement nach Anspruch 1, **dadurch gekennzeichnet, dass** die Dichtungslippe einen gebogenen oder abgewinkelten Querschnitt aufweist, wobei die Biegung oder Abwinkelung in Bezug auf das Dichtungselement nach innen gerichtet sein kann.

3. Dichtungselement nach einem der Ansprüche 1 oder 2, **dadurch gekennzeichnet, dass** die Lippen zweier benachbarter Dichtungselemente aneinander anliegen oder übereinander greifen und so eine Rinne bilden.

4. Dichtungselement nach einem der Ansprüche 1 bis 3, **dadurch gekennzeichnet, dass** die Steigung der Rinne zwischen 30 und 70° gegenüber der Horizontalen beträgt, vorzugsweise zwischen 35 und 60°, insbesondere 40°.

5. Dichtungselement nach einem der Ansprüche 1 bis 4 **dadurch gekennzeichnet, dass** die Ausnehmung eine derartige Größe aufweist, dass die Adhäsion von durchzuleitendem Wasser zu keiner Stauung führt.

6. Dichtungselement nach einem der vorangehenden Ansprüche, **dadurch gekennzeichnet, dass** die Dichtlippe derart ausgebildet ist, dass die Dichtlippen zweier benachbarter Dichtungselemente aneinander anzuliegen vermögen und so eine Abdichtung hergestellt wird.

7. Dichtungselement nach einem der vorangehenden Ansprüche, **dadurch gekennzeichnet, dass** das Dichtungselement ein Eckelement bildet, wobei benachbarte Eckelemente über Verbindungsflansch und Dichtlippe miteinander verbunden sind.

8. Dichtungselement nach Anspruch 7, **dadurch gekennzeichnet, dass** drei, vier oder mehr miteinander verbundene Dichtungselemente zusammen einen Dichtungsrahmen bilden, bei dem in wenigstens einem Teil der Ecken Rinnen vorgesehen sind.

## Claims

1. Sealing element for sealing butt joints between elements of a facade built using the element construction method, wherein the sealing element has a connecting flange for fastening the sealing element to the facade element and one or more sealing lips, wherein the connecting flange is configured as a web bearing on a side edge of the respective facade element, wherein the sealing element is in the form of a corner part or comprises a corner part, and wherein the sealing lip is arranged on a front edge or outer edge of the connecting flange, **characterized in that** an inwardly rising lip is provided, which extends inwardly from the front edge or outer edge of the sealing element, extends along a vertical section of the connecting flange along a depth of the connecting flange and is in the form of a channel, and **in that** the sealing lip is provided with a recess in the region of the lip, wherein the lip projects through this recess or terminates with the sealing lip.

2. Sealing element according to claim 1, **characterized in that** the sealing lip has a curved or angular cross-section, wherein the curvature or angling can be directed inwardly in relation to the sealing element.

3. Sealing element according to any one of claims 1 or 2, **characterized in that** the lips of two adjacent sealing elements bear against one another or engage over one another and thus form a channel.

4. Sealing element according to any one of claims 1 to 3, **characterized in that** the gradient of the channel is between 30 and 70° relative to the horizontal, preferably between 35 and 60°, in particular 40°.

5. Sealing element according to any one of claims 1 to 4, **characterized in that** the recess is of such a size that the adhesion of water to be passed through does not cause a jam_{.}

6. Sealing element according to any one of the preceding claims, **characterized in that** the sealing lip is configured such that the sealing lips of two adjacent sealing elements are able to bear against one another and thus form a seal.

7. Sealing element according to any one of the preceding claims, **characterized in that** the sealing element forms a corner element, wherein adjacent corner elements are connected to one another via a connecting flange and sealing lip.

8. Sealing element according to claim 7, **characterized in that** three, four or more interconnected sealing elements together form a sealing frame, in which channels are provided in at least a part of the corners.

## Revendications

1. Elément d'étanchéité pour sceller des joints bout à bout entre des éléments d'une façade construits à l'aide d'une construction à éléments, l'élément d'étanchéité présentant une bride de liaison pour fixer l'élément d'étanchéité à l'élément de façade et une ou plusieurs lèvres d'étanchéité, la bride de liaison étant conçue comme support d'âme, sur un bord latéral de l'élément de façade respectif, l'élément d'étanchéité étant conçu comme partie d'angle ou comprenant une partie d'angle et la lèvre d'étanchéité étant disposée sur un bord avant ou un bord extérieur de la bride de raccordement, **caractérisé en ce qu'**une lèvre montant vers l'intérieur est prévue qui s'étend vers l'intérieur à partir du bord avant ou du bord extérieur de l'élément d'étanchéité, qui s'étend sur une section verticale de la bride de raccordement le long d'une profondeur de la bride de raccordement et est conçu comme un canal et que la lèvre d'étanchéité est dotée d'un évidement au niveau de la lèvre, la lèvre dépassant de cet évidement ou se terminant par la lèvre d'étanchéité.

2. Elément d'étanchéité selon la revendication 1, **caractérisé en ce que** la lèvre d'étanchéité présente une section transversale incurvée ou coudée, dans laquelle le coude ou l'angle peut être dirigé vers l'intérieur par rapport à l'élément d'étanchéité.

3. Elément d'étanchéité selon l'une des revendications 1 ou 2, **caractérisé en ce que** les lèvres de deux éléments d'étanchéité adjacents reposent l'une contre l'autre ou se chevauchent et forment ainsi un canal.

4. Elément d'étanchéité selon l'une des revendications 1 à 3, **caractérisé en ce que** la pente du canal est comprise entre 30 et 70° par rapport à l'horizontale, de préférence entre 35 et 60°, notamment 40°.

5. Elément d'étanchéité selon l'une des revendications 1 à 4, **caractérisé en ce que** l'évidement a une dimension telle que l'adhésion de l'eau à traverser n'entraîne pas d'encombrement.

6. Elément d'étanchéité selon l'une des revendications précédentes, **caractérisé en ce que** la lèvre d'étanchéité est conçue de telle sorte que les lèvres d'étanchéité de deux éléments d'étanchéité adjacents puissent reposer l'une contre l'autre et qu'un joint d'étanchéité soit ainsi réalisé.

7. Elément d'étanchéité selon l'une des revendications précédentes, **caractérisé en ce que** l'élément d'étanchéité forme un élément de coin, les éléments de coin adjacents étant reliés les uns aux autres par l'intermédiaire d'une bride de liaison et d'une lèvre d'étanchéité.

8. Elément d'étanchéité selon la revendication 7, **caractérisé en ce que** trois, quatre ou plus éléments d'étanchéité interconnectés forment ensemble un cadre d'étanchéité dans lequel des rainures sont prévues dans au moins une partie des coins.
